# EUROPÄISCHE PATENTSCHRIFT

(11) **EP 2 876 060 B1**
(45) Veröffentlichungstag und Bekanntmachung des Hinweises auf die Patenterteilung: **17.05.2017**
(21) Anmeldenummer: 14003935.5
(22) Anmeldetag: 22.11.2014
(51) Int. Cl.: B65G 1/137

(54) **Transporteinrichtung zur Verteilung von verschiedenen Stückgüternzu mehreren Bearbeitungsorten und Verfahren zum Betrieb der Transporteinrichtung**
Transport device for the distribution of different piece goods for multiple processing locations and method for operating the transport device
Dispositif de transport destiné à la répartition de différentes marchandises au détail vers plusieurs lieux de traitement et procédé de fonctionnement du dispositif de transport

(30) Priorität: 22.11.2013 DE 102013019526
(43) Veröffentlichungstag der Anmeldung: 27.05.2015
(73) Patentinhaber: Stock, Bernhard, 63589 Linsengericht (DE)
(72) Erfinder: Stock, Bernhard, 63589 Linsengericht (DE)
(74) Vertreter: Körner, Volkmar Horst

(56) Entgegenhaltungen:
- WO-A1-2013/147597
- DE-B4-102009 058 125
- DE-U1- 20 211 321
- JP-A- S49 127 377

## Beschreibung

Die Erfindung betrifft eine Transporteinrichtung zur Verteilung von verschiedenen Stückgütern zu mehreren Bearbeitungsorten aus zumindest einer Quelle mit mehreren Förderern, mit einem einen Quellenabschnitt und einen Zielabschnitt aufweisenden Bogenförderer, wobei der Quellenabschnitt vor der einen Quelle und der Zielabschnitt vor den Bearbeitungsorten angeordnet ist, mit Längsförderern, welche über den Zielabschnitt des Bogenförderers zu den Bearbeitungsorten geführt sind, wobei die Längsförderer und der Zielabschnitt des Bogenförderers Kreuzungen bilden, an denen Stückgüter gleichzeitig von der Kreuzung weg und auf die Kreuzung bewegbar sind und mit einem innerhalb des Bogenförderers angeordneten Zusatzförderer, wobei der Zusatzförderer einen parallel zu dem Quellenabschnitt des Bogenförderers geführten Quellenabschnitt hat.

Solche Transporteinrichtungen werden in Logistikzentren häufig in automatischen Lagerbereichen eingesetzt, um verschiedenste Stückgüter, wie Waren und Transportbehältnisse aus den Quellen an den Bearbeitungsorten für einen Versand oder einen anderen Lagerbereich zusammenzustellen. An den Bearbeitungsorten befinden sich i. d. R. Arbeitsplätze. Als Förderer werden in der Praxis konventionelle Stetigförderer und ggf. verschiedenste Transportbahnen eingesetzt. Für die Leistungsfähigkeit der Transporteinrichtung ist u. a. die Geschwindigkeit maßgeblich, mit der die Stückgüter aus der Quelle in der vorgesehenen Sortierung zu den Bearbeitungsorten gefördert werden. Insbesondere die Abfolge der Fördertakte an Kreuzungen von Förderern führt bei den aus der Praxis bekannten Transporteinrichtungen zu einer Verringerung der Leistungsfähigkeit. Solche Kreuzungen entstehen jedoch zwangsläufig, wenn mehrere Förderer zu den verschiedenen Bearbeitungsorten eingesetzt werden.

Aus der DE 10 2009 058 125 B4 ist eine transporteinrichtung nach dem Oberbegriff des Anspruchs 1 bekannt geworden, bei der die Leistung des Bogenförderers durch Zusatzförderer erhöht wird. Jedoch erfordert diese Gestaltung im Quellenbereich den Bodenbahntransport der Stückgüter im dreidimensionalen Raum.

Der Erfindung liegt das Problem zugrunde, eine Transporteinrichtung der eingangs genannten Art so weiter zu bilden, dass sie eine besonders hohe Leistungsfähigkeit hat, wobei die Stückgüter in einer vorgesehenen Reihenfolge sortiert an den Bearbeitungsorten angeliefert werden können. Weiterhin liegt der Erfindung das Problem zugrunde, ein Verfahren zum Betrieb der Transporteinrichtung zu schaffen welches eine möglichst hohe Geschwindigkeit des Transports der Stückgüter ermöglicht.

Das erst genannte Problem wird erfindungsgemäß dadurch gelöst, dass die Quellenabschnitte des Bogenförderers und des Zusatzförderers über Längsförderer miteinander verbunden sind, wobei die Längsförderer mit den Quellenabschnitten jeweils Kreuzungen bilden, an denen die Stückgüter gleichzeitig von der Kreuzung weg und auf die Kreuzung bewegbar sind, dass die Quelle zumindest ein Paletten-Hochregallager und ein Kleinteilelager hat und dass das Paletten-Hochregallager und das Kleinteilelager nebeneinander vor den Quellabschnitten des Bogenförderers und des Zusatzförderers angeordnet sind, dass das Kleinteilelager in einer oberen Ebene an einer geschlossenen Bogenbahn angeschlossen ist und dass die Bogenbahn zur sortierten Übergabe der Stückgüter an die Quellenabschnitte vertikal bis in die Längsförderer zwischen den Quellabschnitten des Bogenförderers und des Zusatzförderers geführt ist und/oder dass das Paletten-Hochregallager in eine Ebene über die Quellabschnitte geführte Regal-Längsförderer hat und dass zur sortierten Übergabe der Stückgüter an die Quellenabschnitte jeweils Etagenförderer vertikal bis in die Längsförderer zwischen den Quellabschnitten des Bogenförderers und des Zusatzförderers geführt sind.

Durch diese Gestaltung können an den Kreuzungen zwischen den Quellenabschnitten und den Längsförderern Stückgüter bewegt und zwischen dem Bogenförderer und dem Zusatzförderer verteilt und damit bereitgestellt werden. Die Längsförderer können wie beim Stand der Technik die Stückgüter in beide Richtungen und damit auf den gewünschten Quellenabschnitt verschieben. Die Lieferung der Stückgüter in einer vorgesehenen Reihenfolge sortiert an den Bearbeitungsorten kann mittels unterschiedlicher Technologien erfolgen. Eine Vorsortierung der Waren des Kleinteilelagers kann durch eine geschlossene Bogenbahn, die Vorsortierung der Waren des Paletten-Hochregallagers durch Etagenförderer in die Längsförderer zwischen den Quellabschnitten des Bogenförderers und des Zusatzförderers wirkend, ohne die Nutzung von Weichen, erfolgen. Die Stückgüter werden vorzugsweise auf Paletten oder Behältnissen, welche sowohl von den Längsförderern als auch von Wagen des Bogenförderers transportiert werden können, an den Kreuzungen umgesetzt, wobei deren Ausrichtung beibehalten wird. Durch diese Gestaltung wird eine Verringerung der Leistungsfähigkeit der erfindungsgemäßen Transporteinrichtung durch die Kreuzungen und Weichen vermieden. Der Zusatzförderer und der Bogenförderer weisen vorzugsweise die gleiche Art und den gleichen Aufbau auf und sind durchgängig auf einer Ebene angeordnet. Durchgängige "Ware zum Mann Systeme" weisen unterschiedliche Lager für große und kleine Stückgüter auf. Bei solchen Regallagern gestaltet sich die Transporteinrichtung konstruktiv besonders einfach, weil die Quelle ein Paletten-Hochregallager und ein Kleinteilelager hat und weil das Paletten-Hochregallager und das Kleinteilelager nebeneinander vor den Quellabschnitten des Bogenförderers und des Zusatzförderers angeordnet sind. Vorzugsweise werden die Stückgüter des Kleinteilelagers auf den gleichen Transportwagen wie die Stückgüter des Paletten-Hochregallagers transportiert, wobei der Transportwagen mehrere Behältnisse für Stückgüter aus dem Kleinteilelager aufnehmen kann. Zur weiteren Erhöhung der Transportkapazität der Transporteinrichtung trägt es bei, wenn das Kleinteilelager in einer oberen Ebene an einer geschlossenen Bogenbahn angeschlossen ist und dass die Bogenbahn zur sortierten Übergabe der Stückgüter an die Quellenabschnitte vertikal bis in die Längsförderer zwischen den Quellabschnitten des Bogenförderers und des Zusatzförderers geführt ist. Durch diese Gestaltung können die Stückgüter über die geschlossene Bogenbahn besonders einfach auf die beiden Quellabschnitte verteilt und damit vorsortiert werden. Die Bezeichnung obere Ebene dient nicht zur Orientierung der Ebene, sondern zur Kennzeichnung von unterschiedlichen Ebenen. Zur weiteren Erhöhung der Transportkapazität der Transporteinrichtung trägt es bei, wenn das Paletten-Hochregallager in eine Ebene über die Quellabschnitte geführte Regal-Längsförderer hat und wenn zur sortierten Übergabe der Stückgüter an die Quellenabschnitte jeweils Etagenförderer vertikal bis in die Längsförderer zwischen den Quellabschnitten des Bogenförderers und des Zusatzförderers geführt sind. Die Etagenförderer können als Lifte oder Hubschlitten ausgebildet sein. Die Führung der Regal-Längsförderer über die Ebene der Quellabschnitte dient nicht zur Orientierung der Ebenen, sondern zur Kennzeichnung von unterschiedlichen Ebenen.

Weichen in den Förderern lassen sich gemäß einer vorteilhaften Weiterbildung der Erfindung weitgehend vermeiden, wenn der Zusatzförderer einen parallel zu dem Zielabschnitt des Bogenförderers angeordneten Zielabschnitt hat und wenn die Zielabschnitte des Bogenförderers und des Zusatzförderers über Längsförderer verbunden sind und die Längsförderer mit den Zielabschnitten jeweils Kreuzungen bilden, an denen die Stückgüter gleichzeitig von der Kreuzung weg und auf die Kreuzung bewegbar sind. Diese Gestaltung ermöglicht eine besonders hohe, mittlere Geschwindigkeit des Transports über die Transportbahn und hohe Sortierleistung der Stückgüter. Die Stückgüter lassen sich dank der Erfindung sowohl an den Quellabschnitten als auch an den Zielabschnitten sortieren. Dies ermöglicht die Lieferung der Stückgüter an die Bearbeitungsorte in der gewünschten Reihenfolge, nach erforderlichen Klassen oder nur teilauftragsrein und in einer besonders hohen, mittleren Bahngeschwindigkeit. Weiterhin lassen sich die Stückgüter in dem Längsförderabschnitt zwischen den Zielabschnitten sortieren, synchronisieren und parken. Auch können die Bewegungen des in den Bogenförderer einzuführenden Stückguts und des aus dem Bogenförderer herauszuführenden Stückguts zeitnah gekoppelt und damit in einem Arbeitstakt gleichzeitig bewegt werden. Bei der Koppelung der Stückgüter ist ein geringer Abstand vorteilhaft. Zudem können die Bewegungen mehrerer Stückgüter gekoppelt werden und ggf. kleine Stückgüter auch paarweise bewegt werden. Damit wird vermieden, dass zur Bewegung einzelner Stückgüter an den Kreuzungen die Kreuzung erst frei gemacht werden muss, bevor das nächste Stückgut transportiert werden kann. Dies trägt zur Auslastung des Bogenförderers sowie des Zusatzförderers bei und führt damit zu einer besonders hohen Leistungsfähigkeit der Transporteinrichtung.

Die Bewegung von Stückgütern über Kreuzungen der Längsförderer und des Bogenförderers hinweg gestaltet sich gemäß einer anderen vorteilhaften Weiterbildung der Erfindung besonders einfach, wenn die Längsförderer jeweils von dem Zusatzförderer zu dem Bogenförderer geführte erste Längsförderabschnitte und von dem Bogenförderer zu den Bearbeitungsorten geführte zweite Längsförderabschnitte aufweisen.

Zur leistungskonformen Verringerung des Anlagenaufwandes trägt es gemäß einer anderen vorteilhaften Weiterbildung der Erfindung bei, wenn der Bogenförderer Verbindungsabschnitte zwischen den Quellabschnitten und den Zielabschnitten hat und wenn der Zusatzförderer an zumindest einer der Verbindungsabschnitte angeschlossen ist.

Zur weiteren Verringerung des Anlagenaufwandes trägt es gemäß einer anderen vorteilhaften Weiterbildung der Erfindung bei, wenn der Bogenförderer Weichen an den Verbindungen zum Zusatzförderer hat und dass der Zusatzförderer an den Verbindungsabschnitten angeschlossen ist.

Ein durch die Auslastung der Bogen- und Zusatzförderer bedingter Wechsel von Transportwagen der Transporteinrichtung gestaltet sich gemäß einer anderen vorteilhaften Weiterbildung der Erfindung besonders einfach, wenn der Bogenförderer und der Zusatzförderer über Wagenaustauschbahnen miteinander verbunden sind. Vorzugsweise sind Weichen der Wagenaustauschbahnen in Fahrtrichtung hinter den Zielabschnitten angeordnet. Diese Gestaltung ermöglicht auch evtl. Transporte von Transportbehältnissen.

Zur weiteren Erhöhung der Leistungsfähigkeit der Transporteinrichtung trägt es gemäß einer anderen vorteilhaften Weiterbildung der Erfindung bei, wenn der Zusatzförderer innerhalb des Bogenförderers in einem geschlossenen Bogen geführt ist.

Die Transportkapazität der Transporteinrichtung lässt sich gemäß einer anderen vorteilhaften Weiterbildung der Erfindung weiter erhöhen, wenn die vor dem Kleinteilelager angeordneten Längsförderer nebeneinander angeordnet sind und wenn mehrere kleine Stückgüter nebeneinander vor dem Kleinteilelager die maximale Breite haben wie ein einzelnes Stückgut vor dem Paletten-Hochregallager.

Zur weiteren Erhöhung der Transportkapazität der Transporteinrichtung trägt es gemäß einer anderen vorteilhaften Weiterbildung der Erfindung bei, wenn sämtliche Kreuzungen und auch die Längsförderer zwischen den Quellabschnitten des Bogenförderers und des Zusatzförderers, vor dem Kleinteilelager und dem Paletten-Hochregallager einen der Transportwagenlänge entsprechend großen Abstand hatben, so dass eine gegenseitige Beeinflussung bei der Stückgutübergabe vermieden wird. Die Längsförderer zwischen den Quellabschnitten des Bogenförderers und des Zusatzförderers im Kleinteilelager werden entlang einer geschlossenen Bogenbahn entsprechend positioniert, die Etagenförderer vor dem Paletten-Hochregallager bewegen hierzu die Stückgüter entlang einer Schrägen über die Vertikale, um den zunächst durch die Lagergassen bestimmten geringeren Abstand zu vergrößern.

Stauungen im Betrieb der Transporteinrichtung lassen sich gemäß einer anderen vorteilhaften Weiterbildung der Erfindung weitgehend vermeiden, wenn sämtliche Kreuzungen und auch die Längsförderer zwischen den Quellabschnitten und Zielabschnitten des Bogenförderers und des Zusatzförderers vor dem Kleinteilelager und dem Paletten-Hochregallager einen der Transportwagenlänge entsprechend großen Abstand haben, so dass eine gegenseitige Beeinflussung bei der Stückgutübergabe vermieden wird.

Zur Weiteren Verringerung von Stauungen im Betrieb der Transporteinrichtung trägt es gemäß einer anderen vorteilhaften Weiterbildung der Erfindung bei, wenn zwei Bearbeitungsorte in unterschiedlichen Ebenen angeordnet sind und jeweils mit Längsförderern verbunden sind.

Die Verteilung der Stückgüter über die Ebenen gestaltet sich gemäß einer anderen vorteilhaften Weiterbildung der Erfindung besonders einfach, wenn die Längsförderer über Etagenförderer miteinander verbunden sind.

Das zweit genannte Problem, nämlich die Schaffung eines Verfahrens zum Betrieb der Transporteinrichtung, welches eine möglichst hohe Geschwindigkeit des Transports der Stückgüter ermöglicht, wird erfindungsgemäß dadurch gelöst, dass hintereinander fahrende Wagen mit Stückgütern mit einem Abstand zueinander fahren, welcher dem Abstand zweier Kreuzungen entspricht. Durch diese Gestaltung werden die Stückgüter vorausschauend bewegt, so dass diese zeitgleich an Kreuzungen antreffen, an denen sie zeitgleich umgesetzt werden können. Weiterhin werden hierdurch die Gefahr von Stauungen in der Transporteinrichtung weiter vermieden. Dieses Verfahren ist besonders vorteilhaft im Bereich der Ziel- und Quellabschnitte.

Zur weiteren Verminderung von Stauungen im Betrieb der Transporteinrichtung trägt es gemäß einer anderen vorteilhaften Weiterbildung der Erfindung bei, wenn im Bereich von Kreuzungen des Bogenförderers oder des Zusatzförderers mit Längsförderern aufeinander treffende Stückgüter die auf dem Bogenförderer und dem Zusatzförderer befindliche Stückgüter Vorrang vor den Stückgütern auf den Längsförderern haben.

Ein ständiges, leistungsbeeinflussendes Umschalten von Weichen lässt sich gemäß einer anderen vorteilhaften Weiterbildung der Erfindung vermeiden, wenn die Stückgüter an den Quellabschnitten zur Minimierung der Umschalthäufigkeit der in Förderrichtung hinter den Quellabschnitten befindlichen Weiche sortiert werden. Diese Sortierung erfolgt derart, dass möglichst viele Stückgüter bzw. Wagen in einer Reihe hintereinander gestellt werden, welche bei einer Stellung der Weiche transportiert werden können.

Zur weiteren Erhöhung der Transportkapazität der Transporteinrichtung trägt es gemäß einer anderen vorteilhaften Weiterbildung der Erfindung bei, wenn die Transportbahnen des Bogenförderers und des Zusatzförderers, z. B. nach den Zielabschnitten, von bearbeiteten Stückgütern über die Ausgabeorte entlastet werden, bevor an den Eingabeorten der Warennachschub für das Lager erfolgt und die Transportbahn belastet wird. Dabei können Ausgabeund Eingabeort mit der Transportbahn eine Kreuzung bilden, an der Stückgüter gleichzeitig von der Kreuzung weg und auf die Kreuzung hin bewegt werden.

Eine möglichst hohe Geschwindigkeit des Transports der Stückgüter wird ermöglicht bzw. Stauungen werden reduziert, wenn hintereinander fahrende Wagen mit einem gekoppelten Abstand zueinander fahren, welcher dem geringst möglichen Abstand entspricht.Stauungen können z. B. vor Weichen und Kreuzungen mit erhöhtem Transportaufkommen vorkommen oder aber bei einem vorgelagerten Transporttakt mit erhöhtem Zeitbedarf, z. B. wenn Bewegungen des in den Bogenförderer einzuführenden Stückguts und des aus dem Bogenförderer herauszuführenden Stückguts in einem Arbeitstakt gleichzeitig vorgenommen werden.

Zur leistungskonformen Verringerung des Anlagenaufwandes trägt es gemäß einer anderen vorteilhaften Weiterbildung der Erfindung bei, wenn zwei Wagen auf parallelen Transportbahnen synchron bewegt werden und dabei Stückgüter von dem einen Wagen weg und auf den anderen Wagen hin bewegt werden. Ebenso können in Bereichen mit geringerem Leistungsanspruch, z. B. hinter den Zielabschnitten, Zusatz- und Bogenförderer mit Weichen ausgestattet werden.

Die Verwendung von 2 durchgängigen, geschlossenen Bogenförderern führt zu einem stabilen Materialfluss mit hoher Leistung und somit kürzester Bereitstellungszeit an den Bearbeitungsorten, welche nur durch die Kurvenfahrt (in Abhängigkeit der Warenstapelstabilität/-höhe) etwas beeinflusst wird und bei Ausbildung eines möglichst ausgeglichenen Verhältnisses von Quellen und Zielen/Senken. ein Optimum erfährt.

Die Erfindung lässt zahlreiche Ausführungsformen mit unterschiedlicher Leistungsfähigkeit zu. Zur weiteren Verdeutlichung ihres Grundprinzips sind mehrere davon in den Zeichnungen dargestellt und werden nachfolgend beschrieben. Diese zeigen in
- Fig. 1: eine Transporteinrichtung,
- Fig. 2: eine weitere Ausführungsform der erfindungsgemäßen Transporteinrichtung,
- Fig. 3: eine weitere Ausführungsform der Transporteinrichtung,
- Fig. 4: perspektivisch eine Anbindung eines Kleinteilelagers mit einer Bogenbahn an eine der Ausführungsformen der Transporteinrichtung nach den Figuren 2 oder 3 und eine Anbindung eines Paletten-Hochregallagers mit Etagenförderern an eine der Ausführungsformen der Transporteinrichtung nach den Figuren 2 oder 3,
- Fig. 5: schematisch die Anbindung des Kleinteilelagers und des Hochregallagers an Quellabschnitte der Transporteinrichtung aus den Figuren 1 bis 3,
- Fig. 6: eine weitere Ausführungsform der Transporteinrichtung,
- Fig. 7: einen Querschnitt durch eine weitere Ausführungsform der Anbindung der Transporteinrichtung an Bearbeitungsorte.

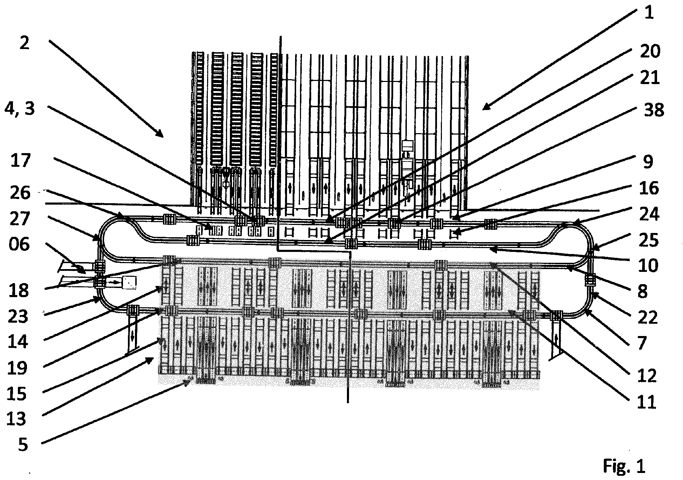

Die Ausführungsformen nach den Figuren 1 bis 3 zeigen jeweils eine Ausführungsform einer Transporteinrichtung mit einem als Quelle von Stückgütern 3, 4 ausgebildeten Paletten-Hochregallager 1 und mit einer als Quelle für kleinere Stückgüter ausgebildeten Kleinteilelager 2. Die Stückgüter 3, 4 werden in einer vorgesehenen Sortierung zu mehreren Bearbeitungsorten 5 transportiert. Bei den Stückgütern 3, 4 kann es sich um Transportbehältnisse wie Paletten, Behälter, wie z. B. Tablare, Großladungsträgerboxen, Gitterboxen, etc. mit / ohne Waren oder dergleichen handeln. Der Warennachschub in die das Paletten-Hochregallager 1 oder das Kleinteilelager 2 erfolgt an Eingabeorten 6.

Art und Aufbau der Bearbeitungsorte 5 nach Fig. 1,3,6, 7 oder Fig. 2 bzw. DE 10 2009 058 125 B4 und somit die Leistungsanforderungen an die Transporteinrichtung, werden durch die erforderliche Reihenfolgebildung der Stückgüter bestimmt. Ebenso die Dynamik des Weichenwirkprinzips, wie beispielsweise die Schaltzeit, die Krümmung der Bögen, die Anzahl und Anordnung der Eingabe- und Ausgabeorte, etc. bestimmen die Leistung.

Die Transporteinrichtung hat einen in einem geschlossenem Bogen geführten Bogenförderer 7 und einen Zusatzförderer 8, 108, 208. Bogenförderer 7 und Zusatzförderer 8, 108, 208 haben jeweils von den Paletten-Hochregallager 1 und den Kleinteilelager 2 angeordnete Quellabschnitte 9, 10 und vor den Bearbeitungsorten 5 angeordnete Zielabschnitte 11, 12. Mehrere Längsförderer 13 sind von dem Zielabschnitt 12 des Zusatzförderers 8, 108, 208 über den Zielabschnitt 11 des Bogenförderers 7 zu den Bearbeitungsorten 5 geführt. Hierdurch haben die Längsförderer 13 jeweils von dem Zielabschnitt 12 des Zusatzförderers 8, 108, 208 zu dem Zielabschnitt 11 des Bogenförderers 7 geführte erste Längsförderabschnitte 14 und von dem Zielabschnitt 11 des Bogenförderers 7 zu den Bearbeitungsorten 5 geführte zweite Längsförderabschnitte 15. Die Quellenabschnitte 9, 10 des Bogenförderers 7 und des Zusatzförderers 8, 108, 208 sind über weitere Längsförderer 16, 17 miteinander verbunden. Die Längsförderer 13, 16, 17 bilden mit den Zielabschnitten 11, 12 und den Quellenabschnitten 9, 10 jeweils Kreuzungen 18 - 21, an denen die Stückgüter 3, 4 gleichzeitig von der Kreuzung 18 - 21 weg und auf die Kreuzung 18 - 21 bewegbar sind. Die vor dem Kleinteilelager 2 angeordneten Längsförderer 17 sind paarweise angeordnet. Ein Paar der Längsförderer 17 vor dem Kleinteilelager 2 hat die maximale Breite wie ein einzelnes Stückgut 3 vor dem Paletten-Hochregallager 1. Der Bogenförderer 7 hat Verbindungsabschnitte 22, 23 zur Verbindung der Enden des Quellabschnittes 9 und des Zielabschnittes 11.

Jeweils mehrere Längsförderer 13 sind parallel zu den einzelnen Bearbeitungsorten 5 geführt. Der Bogenförderer 7 und der Zusatzförderer 8, 108, 208 sind Transportbahnen und jeweils als Elektrobodenbahn ausgebildet und weisen die gleiche Art und den gleichen Aufbau auf, so dass sämtliche Stückgüter 3, 4 auf allen Förderern transportiert werden können. Die Längsförderer 17 sind speziell für Transport von kleinen Stückgütern 4, die Längsförderer 13 für große oder kleine Stückgüter, die Längsförderer 16 nur für große Stückgüter ausgebildet.

Bei der in Figur 1 dargestellten Ausführungsform sind der Quellabschnitt 10 und der Zielabschnitt 12 des Zusatzförderers 8 mit hochdynamischen Weichen 24- 27 an den Verbindungsabschnitten 22, 23 des Bogenförderers 7 angeschlossen. Der Quellabschnitt 10 kann auch nur zu Überholzwecken oder als Parkplatz für Wagen, bei niedriger Auslastung genutzt werden.

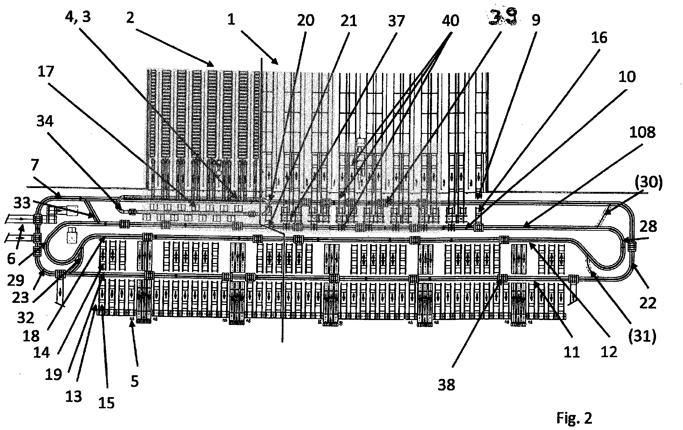

Figur 2 zeigt eine Ausführungsform der Transporteinrichtung, welche sich von der aus Figur 1 vor allem dadurch unterscheidet, dass ein Zusatzförderer 108 ebenfalls Verbindungsabschnitte 28, 29 zur Verbindung des Quellabschnitts 10 und des Zielabschnittes 12 hat. Damit ist der Zusatzförderer 108 wie der Bogenförderer 7 als geschlossener Bogen ausgebildet. Bogenförderer 7 und Zusatzförderer 108 sind über Wagenaustauschbahnen 30 - 33 miteinander verbunden. Diese Gestaltung ermöglicht auch evtl. Transporte von Stückgütern. Weiterhin ist das Kleinteilelager 2 über eine geschlossene Bogenbahn 34 etwa mittig in den Längsförderern 17 zwischen Quellabschnitten 9, 10 des Bogenförderers 7 und des Zusatzförderers 108 angebunden. Das Hochregallager 1 hat in eine Ebene über die Quellabschnitte geführte Regal-Längsförderer 39. Über die Regal-Längsförderer gelangen die Stückgüter 3, 4 aus dem Hochregallager 1 zu Etagenförderern 37. Diese Etagenförderer transportieren die Waren zu den Längsförderern zwischen den Quellabschnitten 9, 10 des Bogenförderers 7 und des Zusatzförderers 108.

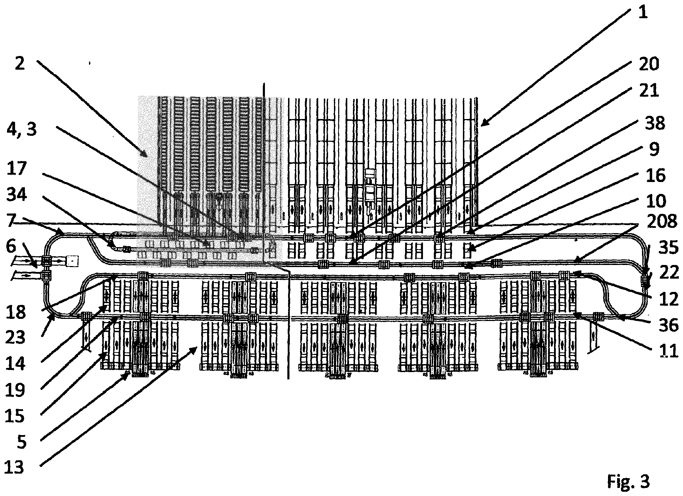

Figur 3 zeigt eine weitere Ausführungsform der Transporteinrichtung, welche sich im Wesentlichen von der aus Figur 2 dadurch unterscheidet, dass ein Zusatzförderer 208 in Bewegungsrichtung der Stückgüter 3, 4 vor den Zielabschnitten 11, 12 über hochdynamische Weichen (35, 36) an dem Verbindungsabschnitt 22 des Bogenförderers 7 angeschlossen ist. Ansonsten ist diese Ausführungsform wie die aus Figur 2 aufgebaut.

Allen Ausführungsformen der Transporteinrichtung ist gemeinsam, dass der Bogenförderer 7 und der Zusatzförderer 8, 108, 208 Transportbahnen sind und beispielsweise als schienengebundene, kurvengängige Bodenbahn ausgebildet sind. An den Bearbeitungsorten 5 lassen sich verschiedene Stückgüter 4, 3 gleichzeitig verarbeiten, weil mehrere Längsförderer 13 für kleine und große Stückgüter parallel zu einem gemeinsamen Bearbeitungsort 5 geführt sind. Durch diese Gestaltung können beispielsweise über die Längsförderer 13 wahlweise Transportbehältnisse und Waren zu den Bearbeitungsorten 5 geführt werden. Über weitere, oder auch nur einen gemeinsamen Längsförderer 13 zwischen den Bearbeitungsorten 5, kann die auf die Transportbehältnisse umverteilte Ware abtransportiert werden.

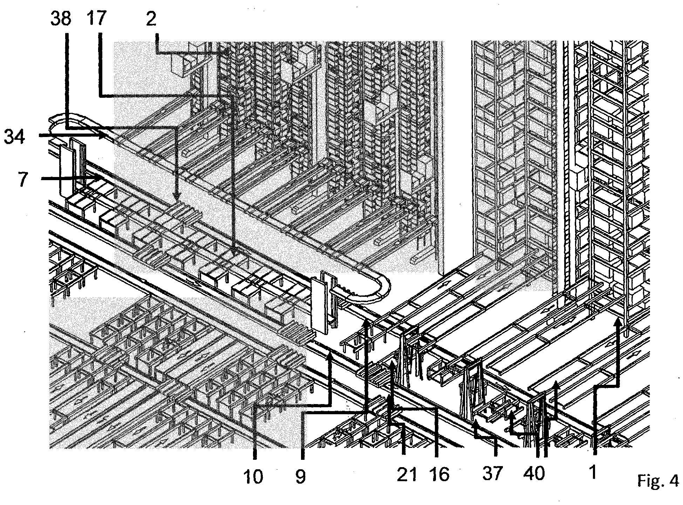

Figur 4 zeigt die Anbindung des Kleinteilelagers 2 und des Paletten-Hochregallagers 1 an die Längsförderer 17,16 zwischen den Quellabschnitten 9, 10 des Bogenförderers 7 und des Zusatzförderers 108 208 der Ausführungsform der Transporteinrichtungen nach den Figuren 2, bzw. 6 und 3. Hierbei ist zu erkennen, dass die Bogenbahn 34 von einer vertikal erhöhten Ebene vor dem Kleinteilelager 2 in die Ebene der Längsförderer 17,16 geführt ist. Weiterhin sind Regal-Längsförderer 40 vor dem Hochregallager 1 zu erkennen, welche über Etagenförderer 37 von einer erhöhten Ebene mit der Ebene der Längsförderer 16, 17 verbunden sind.

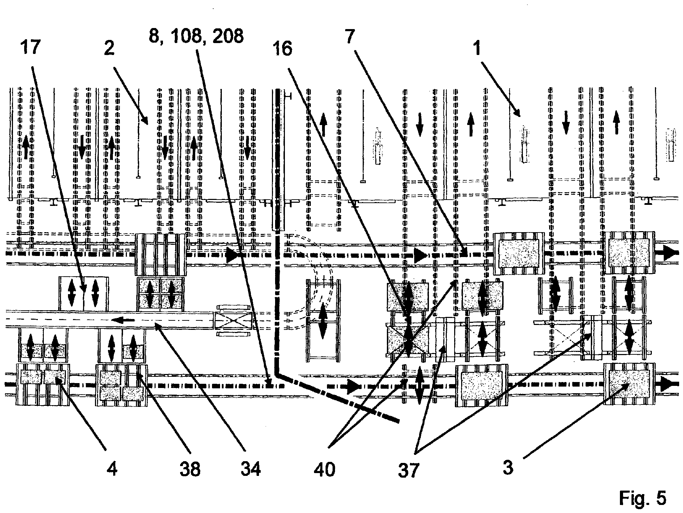

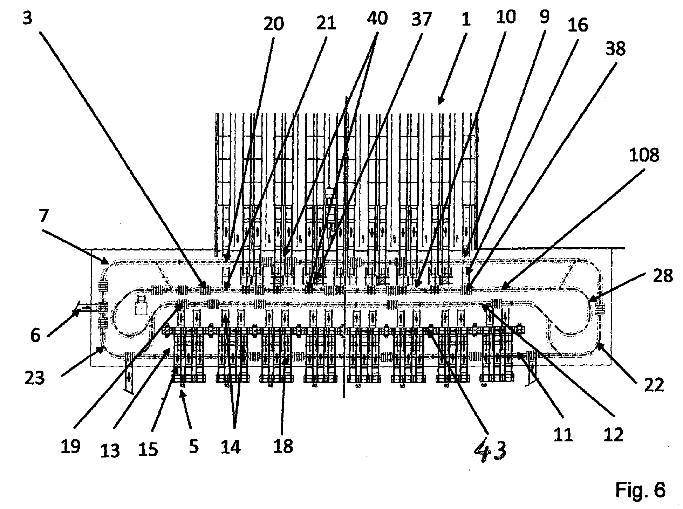

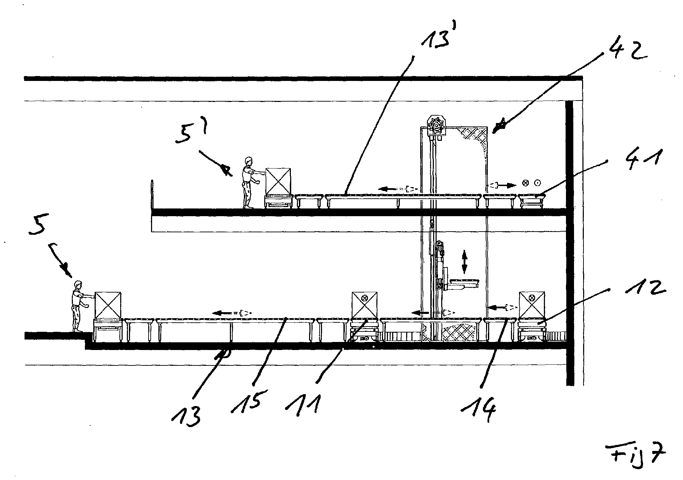

Figur 5 zeigt beispielhaft die Anbindung des Hochregallagers 1 und des Kleinteilelagers 2 an den Bogenförderer 7 und den Zusatzförderer 8, 108, 208 mit beispielhaft unterschiedlichen Stückgütern 3, 4. Das erste Stückgut 3 wird auf einem Wagen des Bogenförderers 7 transportiert. Das zweite Stückgut 4 wird auf einem der Längsförderer 13 auf einen weiteren Wagen 38 des Zusatzförderers transportiert. Die Stückgüter 3 aus dem Hochregallager 1 können einzeln auf den Transportwagen 38, transportiert werden, während beispielhaft kleine Stückgüter 4 aus dem Kleinteilelager 2 auf einem einzigen Transportwagen 38 abgelegt und von diesem entfernt werden können. Diese Wagen 38 weisen beim Transport von kleinen und großen Stückgütern 3, 4 vorzugsweise die gleiche Art und den gleichen Aufbau auf und sind durchgängig auf einer Ebene angeordnet. Die Lastaufnahmemittel dieser Wagen 38 werden vorzugsweise mit unabhängig voneinander wirkenden Antrieben ausgestattet, um kleine Stückgüter 4 vereinzelt oder paarweise hinter-/nebeneinander aufnehmen und abgeben zu können.
Die kleinen Stückgüter 4 können von den Wagen 38 in Sammelfahrten aufgenommen und anschließend abgegeben werden. Weiterhin zeigt Figur 5 mehrere Regal-Längsförderer 40. In der gleichen Art gestaltet sich die Anbindung des Hochregallagers an Quellabschnitte der Transporteinrichtung aus den Figuren 6 und 7.

Figur 6 zeigt eine weitere Ausführungsform der Transporteinrichtung, z. B. in Anlehnung an das Prinzip der in Fig. 2 dargestellten Etagen-/Vertikalförderer 37 oder über eine raumgängige/dreidimensionale Transporteinrichtung 43, wobei Waren der Längsförderer 14 zwischen den Zielabschnitten 11, 12 des Bogenförderers 7 und des Zusatzförderers 108 führen und somit die aussenliegenden Bearbeitungsorte 5 angeschlossen werden.

Die Bewegungen von Wagen 38 entlang der Bogen- und Zusatzförderer werden derart gesteuert, dass die Wagen 38 der Bogen- und Zusatzförderer mit den darauf befindlichen Stückgütern 3, 4 eine maximale, mittlere Transportgeschwindigkeit erreichen und sich zumindest im Abstand der in Förderrichtung vorgelagerten Kreuzungen 18 - 21 transportbereit bewegen, sofern in diesem Bereich die Bewegung von Stückgütern 3, 4 über Kreuzungen 18 - 21 erforderlich werden. Die Optimierung der anzufahrenden Ziele erfolgt dabei fortlaufend. Die Bewegungen aus konventionellen Stetigförderern (z. B. Längsförderer, Abgabeorte, ...) und Wagen 38 resultierend, sind an den Kreuzungen 18 - 21 möglichst rechtzeitig abzuschließen, bevor die nachfolgenden Transportwagen 38 die Kreuzungen erreichen. Die Steuerung der Wagen 38 orientiert sich insbesondere an der vorgegebenen Priorisierung der Transporte, den Kreuzungen 18 - 21 mit hoher Auslastung, den Füllgraden der Quellen und Ziele bzw. konventionellen Stetigförderer, etc. Werden wie bei der Ausführungsform nach Figur 1 und 3 Weichen 24 - 27, 35, 36 in der Transporteinrichtung eingesetzt, sind die Wagen 38 so zu beladen, dass die Weichen 24 - 27, 35, 36 möglichst mit Wagenpulks in geringem Wagenabstand belastet werden und so die Umschaltungen der Weichen 24 - 27, 35, 36 reduziert werden.

Zur zusätzlichen Anbindung eines Kleinteilelagers 2 mit den Bearbeitungsorten 5, können in einer alternativen, nicht dargestellten Ausführungsform der Fig. 6, die Transporteinrichtungen des Zielabschnittes, ebenso mit Etagen-/Vertikalförderern oder über raumgängige/dreidimensionale Förderer für kleine Stückgüter ausgestattet werden. Der Quellenabschnitt könnte dabei gem. Fig. 2,3 ausgeführt werden.

Figur 7 zeigt eine weitere Ausführungsform der Anbindung der Transporteinrichtung an zwei Bearbeitungsorte 5, 5'Zusatzförderer und Bogenförderer weisen vorzugsweise die gleiche Art und den gleichen Aufbau wie in den oben genannten Ausführungsbeispielen beschrieben auf und sind zumindest an Kreuzungen, durchgängig auf einer Ebene angeordnet. Weiterhin hat diese Ausführungsform einen Querförderer 41, ggf. im Aufbau und der Funktion mit dem Bogenförderer 7 vergleichbar.

Die Bearbeitungsorte 5, 5' sind in zwei Ebenen angeordnet und jeweils mit Längsförderern 13, 13' verbunden. In und zwischen den Längsförderern sind Etagenförderer 42 angeordnet, welche einen Austausch von Stückgütern 3, 4 über die unterschiedlichen Ebenen ermöglichen. Die Längsförderer 13, 13' haben jeweils Längsförderabschnitte 13, 14, 13', 14' und sind aufgebaut wie zu Figuren 1, 2 und 3 beschrieben und verbinden auch Zusatz- und Bogenförderer. Die bearbeiteten Stückgüter können mit Querförderern, die Transportbahnen entlastend, direkt an die Ausgabeorte angeschlossen werden.
Diese Ausführungsform vermindert ein Aufschaukeln von Stauungen innerhalb der Transporteinrichtung. In Verbindung mit den oben genannten Ausführungsformen der Transporteinrichtung ermöglicht diese Gestaltung die Ausbildung der Längsförderer in einem leistungsfördernden Abstand, auch bei großer Zieldichte, , bei bester Nutzung des umbauten Raumes bzw. der überbauten Fläche.

## Patentansprüche

1. Transporteinrichtung zur Verteilung von verschiedenen Stückgütern (3, 4) zu mehreren Bearbeitungsorten (5) aus zumindest einer Quelle mit mehreren Förderern, mit einem einen Quellenabschnitt (9) und einen Zielabschnitt (11) aufweisenden Bogenförderer (7), wobei der Quellenabschnitt (9) vor der einen Quelle und der Zielabschnitt (11) vor den Bearbeitungsorten (5) angeordnet ist, mit Längsförderern (13), welche über den Zielabschnitt (11) des Bogenförderers (7) zu den Bearbeitungsorten (5) geführt sind, wobei die Längsförderer (13) und der Zielabschnitt (11) des Bogenförderers (7) Kreuzungen (19) bilden, an denen Stückgüter (3, 4) gleichzeitig von der Kreuzung (19) weg und auf die Kreuzung (19) bewegbar sind und mit einem innerhalb des Bogenförderers (7) angeordneten Zusatzförderer (8, 108, 208), wobei der Zusatzförderer (8) einen parallel zu dem Quellenabschnitt (9) des Bogenförderers (7) geführten Quellenabschnitt (10) hat, **dadurch gekennzeichnet, dass** die Quellenabschnitte (9, 10) des Bogenförderers (7) und des Zusatzförderers (8, 108, 208) über Längsförderer (16, 17) miteinander verbunden sind, wobei die Längsförderer (16, 17) mit den Quellenabschnitten (9, 10) jeweils Kreuzungen (20, 21) bilden, an denen die Stückgüter (3, 4) gleichzeitig von der Kreuzung (20, 21) weg und auf die Kreuzung (20, 21) bewegbar sind, dass die Quelle zumindest ein Paletten-Hochregallager (1) und ein Kleinteilelager (2) hat und dass das Paletten-Hochregallager (1) und das Kleinteilelager (2) nebeneinander vor den Quellabschnitten (9, 10) des Bogenförderers (7) und des Zusatzförderers (8, 108, 208) angeordnet sind, dass das Kleinteilelager (2) in einer oberen Ebene an einer geschlossenen Bogenbahn (34) angeschlossen ist und dass die Bogenbahn (34) zur sortierten Übergabe der Stückgüter (3, 4) an die Quellenabschnitte (9, 10) vertikal bis in die Längsförderer (17) zwischen den Quellabschnitten (9, 10) des Bogenförderers (7) und des Zusatzförderers (108, 208) geführt ist und/oder dass das Paletten-Hochregallager (1) in eine Ebene über die Quellabschnitte (9, 10) geführte Regal-Längsförderer (40) hat und dass zur sortierten Übergabe der Stückgüter (3, 4) an die Quellenabschnitte (9, 10) jeweils Etagenförderer (37) vertikal bis in die Längsförderer (16) zwischen den Quellabschnitten (9, 10) des Bogenförderers (7) und des Zusatzförderers (108) geführt sind.

2. Transporteinrichtung nach Anspruch 1, **dadurch gekennzeichnet, dass** der Zusatzförderer (8, 108, 208) einen parallel zu dem Zielabschnitt (11) des Bogenförderers (7) angeordneten Zielabschnitt (12) hat und dass die Zielabschnitte (11, 12) des Bogenförderers (7) und des Zusatzförderers (8, 108, 208) über Längsförderer (1.3) verbunden sind und die Längsförderer (13) mit den Zielabschnitten (11, 12) jeweils Kreuzungen (18, 19) bilden, an denen die Stückgüter (3, 4) gleichzeitig von der Kreuzung (18, 19) weg und auf die Kreuzung (18, 19) bewegbar sind.

3. Transporteinrichtung nach Anspruch 2, **dadurch gekennzeichnet, dass** die Längsförderer (13) jeweils von dem Zusatzförderer (8, 108, 208) zu dem Bogenförderer (7) geführte erste Längsförderabschnitte (14) und von dem Bogenförderer (7) zu dem Bearbeitungsort (5) geführte zweite Längsförderabschnitte (15) aufweisen.

4. Transporteinrichtung nach einem der Ansprüche 1 bis 3, **dadurch gekennzeichnet, dass** der Bogenförderer (7) Verbindungsabschnitte (22, 23) zwischen den Quellabschnitten (9) und den Zielabschnitten (11) hat und dass der Zusatzförderer (8, 208) an zumindest einem der Verbindungsabschnitte (22, 23) angeschlossen ist.

5. Transporteinrichtung nach Anspruch 4, **dadurch gekennzeichnet, dass** der Bogenförderer (7) Weichen (24, 25, 26, 27) an den Verbindungen zum Zusatzförderers (8, 108, 208) hat und dass der Zusatzförderer (8, 208) an den Verbindungsabschnitten (22, 23) angeschlossen ist.

6. Transporteinrichtung nach einem der Ansprüche 1 bis 5, **dadurch gekennzeichnet, dass** der Bogenförderer (7) und der Zusatzförderer (108, 208) über Wagenaustauschbahnen (30 - 33) miteinander verbunden sind.

7. Transporteinrichtung nach einem der Ansprüche 1 bis 6, **dadurch gekennzeichnet, dass** der Zusatzförderer (108) innerhalb des Bogenförderers (7) in einem geschlossenen Bogen geführt ist.

8. Transporteinrichtung nach Anspruch 1, **dadurch gekennzeichnet, dass** die vor dem Kleinteilelager (2) angeordneten Längsförderer (17) nebeneinander angeordnet sind und dass mehrere kleine Stückgüter (3, 4) nebeneinander vor dem Kleinteilelager (4) die maximale Breite haben wie ein einzelnes Stückgut(3, 4) vor dem Paletten-Hochregallager (1).

9. Transporteinrichtung nach einem der Ansprüche 1 - 8, **dadurch gekennzeichnet, dass** sämtliche Kreuzungen (18, 19, 20, 21) und auch die Längsförderer (14, 15, 16, 17) zwischen den Quellabschnitten (9, 10) und Zielabschnitten (11, 12) des Bogenförderers (7) und des Zusatzförderers (8, 108, 208) vor dem Kleinteilelager (2) und dem Paletten-Hochregallager (1) einen der Transportwagenlänge entsprechend großen Abstand haben, so dass eine gegenseitige Beeinflussung bei der Stückgutübergabe vermieden wird.

10. Transporteinrichtung nach einem der Ansprüche 1 - 9, **dadurch gekennzeichnet, dass** zwei Bearbeitungsorte (5, 5') in unterschiedlichen Ebenen angeordnet sind und jeweils mit Längsförderern (13, 13') verbunden sind.

11. Transporteinrichtung nach einem der Ansprüche 1 bis 10, **dadurch gekennzeichnet, dass** die Längsförderer (13, 13') über einen Etagenförderer (42) miteinander verbunden sind.

12. Verfahren zum Betrieb der Transporteinrichtung nach einem der Ansprüche 1 - 11, **dadurch gekennzeichnet, dass** hintereinander fahrende Wagen (38) mit Stückgütern (3, 4) mit einem Abstand zueinander fahren, welcher dem Abstand zweier Kreuzungen (18 - 21) entspricht.

13. Verfahren nach Anspruch 12, **dadurch gekennzeichnet, dass** in Bereich von Kreuzungen (18 - 21) des Bogenförderers (7) oder des Zusatzförderers (8, 108, 208) mit Längsförderern (13, 16, 17) aufeinandertreffende Stückgüter (3, 4) die auf dem Bogenförderer (7) und dem Zusatzförderer (8, 108, 208) befindliche Stückgüter (3, 4) Vorrang vor den Stückgütern (3, 4)) auf den Längsförderern (13, 16, 17) haben.

14. Verfahren nach Anspruch 13, **dadurch gekennzeichnet, dass** die Stückgüter (3, 4) an den Quellabschnitten (9, 10) zur Minimierung der Umschalthäufigkeit einer in Förderrichtung hinter den Quellabschnitten (9, 19) befindlichen Weiche (24, 25, 35, 36) sortiert werden.

## Claims

1. Transportation device for the distribution of various piece goods (3, 4) to a plurality of processing sites (5) from at least one source having a plurality of conveyors, with a circular conveyor (7) having a source portion (9) and a destination portion (11), wherein the source portion (9) is arranged in front of the one source and the destination portion (11) is arranged in front of the processing sites (5), with longitudinal conveyors (13) which are guided to the processing sites (5) via the destination portion (11) of the circular conveyor (7), wherein the longitudinal conveyors (13) and the destination portion (11) of the circular conveyor (7) form intersections (19) at which piece goods (3, 4) are simultaneously movable away from the intersection (19) and towards the intersection (19), and with an additional conveyor (8, 108, 208) arranged inside the circular conveyor (7), wherein the additional conveyor (8) has a source portion (10) guided parallel to the source portion (9) of the circular conveyor (7), **characterised in that** the source portions (9, 10) of the circular conveyor (7) and of the additional conveyor (8, 108, 208) are interconnected by longitudinal conveyors (16, 17), the longitudinal conveyors (16, 17) respectively forming with the source portions (9, 10) intersections (20, 21) at which the piece goods (3, 4) are simultaneously movable away from the intersection (20, 21) and towards the intersection (20, 21), **in that** the source has at least one pallet high-bay storage (1) and one small parts storage (2), and **in that** the pallet high-bay storage (1) and the small parts storage (2) are arranged next to one another upstream of the source portions (9, 10) of the circular conveyor (7) and of the additional conveyor (8, 108, 208), **in that** the small parts storage (2) is connected to a closed curved path (34) in an upper plane, and **in that** the curved path (34) is guided vertically into the longitudinal conveyors (17) between the source portions (9, 10) of the circular conveyor (7) and of the additional conveyor (108, 208) for the sorted transfer of the piece goods (3, 4) to the source portions (9, 10), and/or **in that** the pallet high-bay storage (1) has longitudinal rack conveyors (40) which are guided in a plane above the source portions (9, 10), and **in that** vertical floor conveyors (37) are respectively guided vertically into the longitudinal conveyors (16) between the source portions (9, 10) of the circular conveyor (7) and of the additional conveyor (108) for the sorted transfer of the piece goods (3, 4) to the source portions (9, 10).

2. Transportation device according to Claim 1, **characterised in that** the additional conveyor (8, 108, 208) has a destination portion (12) which is arranged parallel to the destination portion (11) of the circular conveyor (7), and **in that** the destination portions (11, 12) of the circular conveyor (7) and of the additional conveyor (8, 108, 208) are connected by longitudinal conveyors (13), and the longitudinal conveyors (13) respectively form with the destination portions (11, 12) intersections (18, 19) at which the piece goods (3, 4) are simultaneously movable away from the intersection (18, 19) and towards the intersection (18, 19).

3. Transportation device according to Claim 2, **characterised in that** the longitudinal conveyors (13) respectively have first longitudinal conveyor portions (14) which are guided from the additional conveyor (8, 108, 208) to the circular conveyor (7) and second longitudinal conveyor portions (15) which are guided from the circular conveyor (7) to the processing site (5).

4. Transportation device according to any of Claims 1 to 3, **characterised in that** the circular conveyor (7) has connecting portions (22, 23) between the source portions (9) and the destination portions (11), and **in that** the additional conveyor (8, 208) is connected to at least one of the connecting portions (22, 23).

5. Transportation device according to Claim 4, **characterised in that** the circular conveyor (7) has switch points (24, 25, 26, 27) at the connections to the additional conveyor (8, 108, 208), and **in that** the additional conveyor (8, 208) is connected to the connecting portions (22, 23).

6. Transportation device according to any of Claims 1 to 5, **characterised in that** the circular conveyor (7) and the additional conveyor (108, 208) are interconnected by trolley interchange tracks (30 - 33).

7. Transportation device according to any of Claims 1 to 6, **characterised in that** the additional conveyor (108) is guided inside the circular conveyor (7) in a closed loop.

8. Transportation device according to Claim 1, **characterised in that** the longitudinal conveyors (17), arranged in front of the small parts storage (2) are arranged next to one another, and **in that** a plurality of small piece goods (3, 4) next to one another have the maximum width in front of the small parts storage (4) as a single piece good (3, 4) in front of the pallet high-bay storage (1).

9. Transportation device according to any of Claims 1 to 8, **characterised in that** all the intersections (18, 19, 20, 21) and also the longitudinal conveyors (14, 15, 16, 17) between the source portions (9, 10) and destination portions (11, 12) of the circular conveyor (7) and of the additional conveyor (8, 108, 208) have a distance corresponding to the length of the transport trolleys in front of the small parts storage (2) and the pallet high-bay storage (1), so that during transfer, the piece goods are prevented from influencing one another.

10. Transportation device according to any of Claims 1 to 9, **characterised in that** two processing sites (5, 5') are arranged in different planes and are respectively connected to longitudinal conveyors (13, 13').

11. Transportation device according to any of Claims 1 to 10, **characterised in that** the longitudinal conveyors (13, 13') are interconnected by a vertical floor conveyor (42).

12. Method for operating the transportation device according to any of Claims 1 to 11, **characterised in that** trolleys (38) with piece goods (3, 4) travelling in tandem travel at a distance from one another which corresponds to the distance of two intersections (18 - 21).

13. Method according to Claim 12, **characterised in that** piece goods (3, 4) coming together in the region of intersections (18-21) of the circular conveyor (7) or of the additional conveyor (8, 108, 208) with longitudinal conveyors (13, 16, 17) the piece goods (3, 4) located on the circular conveyor (7) and on the additional conveyor (8, 108, 208) take precedence over the piece goods (3, 4) on the longitudinal conveyors (13, 16, 17).

14. Method according to Claim 13, **characterised in that** the piece goods (3, 4) at the source portions (9, 10) are sorted in order to minimise the switch-over frequency of a switch point (24, 25, 35, 36) located downstream of the source portions (9, 19) in the conveying direction.

## Revendications

1. Dispositif de transport destiné à la répartition de différentes marchandises (3, 4) vers plusieurs lieux de traitement (5) depuis au moins une source avec plusieurs convoyeurs, avec un convoyeur circulaire (7) présentant une section de source (9) et une section de cible (11), dans lequel la section de source (9) est agencée devant la une source et la section de cible (11) est agencée devant les lieux de traitement (5), avec des convoyeurs longitudinaux (13), lesquels sont guidés via la section de cible (11) du convoyeur circulaire (7) vers les lieux de traitement (5), dans lequel les convoyeurs longitudinaux (13) et la section de cible (11) du convoyeur circulaire (7) forment des intersections (19) au niveau desquelles des marchandises (3, 4) peuvent être simultanément déplacées depuis l'intersection (19) et vers l'intersection (19) et avec un convoyeur supplémentaire (8, 108, 208) agencé à l'intérieur du convoyeur circulaire (7), dans lequel le convoyeur supplémentaire (8) a une section de source (10) guidée parallèlement à la section de source (9) du convoyeur circulaire (7), **caractérisé en ce que** les sections de source (9, 10) du convoyeur circulaire (7) et du convoyeur supplémentaire (8, 108, 208) sont reliées entre elles via des convoyeurs longitudinaux (16, 17), dans lequel les convoyeurs longitudinaux (16, 17) forment respectivement des intersections (20, 21) avec les sections de source (9, 10), au niveau desquelles intersections les marchandises (3, 4) peuvent être simultanément déplacées depuis l'intersection (20, 21) vers l'intersection (20, 21), **en ce que** la source a au moins un magasin à rayonnages de palettes (1) et un magasin de petites pièces (2) et **en ce que** le magasin à rayonnages de palettes (1) et le magasin de petites pièces (2) sont agencés l'un à côté de l'autre devant les sections de source (9, 10) du convoyeur circulaire (7) et du convoyeur supplémentaire (8, 108, 208), **en ce que** le magasin de petites pièces (2) est raccordé dans un plan supérieur à une bande circulaire (34) fermée et **en ce que** la bande circulaire (34) est guidée pour la livraison triée des marchandises (3, 4) aux sections de source (9, 10) verticalement jusque dans les convoyeurs longitudinaux (17) entre les sections de source (9, 10) du convoyeur circulaire (7) et du convoyeur supplémentaire (108, 208) et/ou **en ce que** le magasin à rayonnages de palettes (1) a des convoyeurs longitudinaux de rayonnage (40) guidés dans un plan au-dessus des sections de source (9, 10) et **en ce que** pour la livraison triée des marchandises (3, 4) aux sections de source (9, 10) des convoyeurs d'étage (37) sont respectivement guidés verticalement jusque dans les convoyeurs longitudinaux (16) entre les sections de source (9, 10) du convoyeur circulaire (7) et du convoyeur supplémentaire (108).

2. Dispositif de transport selon la revendication 1, **caractérisé en ce que** le convoyeur supplémentaire (8, 108, 208) a une section de cible (12) agencée parallèlement à la section de cible (11) du convoyeur circulaire (7) et **en ce que** les sections de cible (11, 12) du convoyeur circulaire (7) et du convoyeur supplémentaire (8, 108, 208) sont reliées via des convoyeurs longitudinaux (13) et les convoyeurs longitudinaux (13) forment respectivement des intersections (18, 19) avec les sections de cible (11, 12), au niveau desquelles les marchandises (3, 4) peuvent être simultanément déplacées depuis l'intersection (18, 19) et vers l'intersection (18, 19).

3. Dispositif de transport selon la revendication 2, **caractérisé en ce que** les convoyeurs longitudinaux (13) présentent respectivement des premières sections de convoyage longitudinal (14) guidées depuis le convoyeur supplémentaire (8, 108, 208) vers le convoyeur circulaire (7) et des secondes sections de convoyage longitudinal (15) guidées depuis le convoyeur circulaire (7) vers le lieu de traitement (5).

4. Dispositif de transport selon l'une quelconque des revendications 1 à 3, **caractérisé en ce que** le convoyeur circulaire (7) a des sections de liaison (22, 23) entre les sections de source (9) et les sections de cible (11) et **en ce que** le convoyeur supplémentaire (8, 208) est raccordé à au moins l'une des sections de liaison (22, 23).

5. Dispositif de transport selon la revendication 4, **caractérisé en ce que** le convoyeur circulaire (7) a des aiguillages (24, 25, 26, 27) au niveau des liaisons avec le convoyeur supplémentaire (8, 108, 208) et **en ce que** le convoyeur supplémentaire (8, 208) est raccordé aux sections de liaison (22, 23).

6. Dispositif de transport selon l'une quelconque des revendications 1 à 5, **caractérisé en ce que** le convoyeur circulaire (7) et le convoyeur supplémentaire (108, 208) sont reliés l'un à l'autre via des bandes d'échange de chariots (30 à 33).

7. Dispositif de transport selon l'une quelconque des revendications 1 à 6, **caractérisé en ce que** le convoyeur supplémentaire (108) est guidé à l'intérieur du convoyeur circulaire (7) dans une courbe fermée.

8. Dispositif de transport selon la revendication 1, **caractérisé en ce que** les convoyeurs longitudinaux (17) agencés devant le magasin de petites pièces (2) sont agencés l'un à côté de l'autre et **en ce que** plusieurs petites marchandises (3, 4) l'une à côté de l'autre devant le magasin de petites pièces (2) ont une largeur maximale égale à une seule marchandise (3, 4) devant le magasin à rayonnages de palettes (1).

9. Dispositif de transport selon l'une quelconque des revendications 1 à 8, **caractérisé en ce que** toutes les intersections (18, 19, 20, 21) et également les convoyeurs longitudinaux (14, 15, 16, 17) maintiennent un grand intervalle correspondant à la longueur des chariots de transport entre les sections de source (9, 10) et les sections de cible (11, 12) du convoyeur circulaire (7) et des convoyeurs supplémentaires (8, 108, 208) devant le magasin de petites pièces (2) et le magasin à rayonnages de palettes (1), de sorte qu'une interférence réciproque soit évitée lors de la livraison des marchandises.

10. Dispositif de transport selon l'une quelconque des revendications 1 à 9, **caractérisé en ce que** deux lieux de traitement (5, 5') sont agencés sur des plans différents et sont respectivement reliés à des convoyeurs longitudinaux (13, 13').

11. Dispositif de transport selon l'une quelconque des revendications 1 à 10, **caractérisé en ce que** les convoyeurs longitudinaux (13, 13') sont reliés l'un à l'autre via un convoyeur d'étage (42).

12. Procédé de fonctionnement du dispositif de transport selon l'une quelconque des revendications 1 à 11, **caractérisé en ce que** des chariots (38) roulant l'un derrière l'autre avec des marchandises (3, 4) roulent avec un intervalle entre eux, lequel correspond à l'intervalle entre deux intersections (18 à 21).

13. Procédé selon la revendication 12, **caractérisé en ce que** des marchandises (3, 4) se rencontrant dans des régions d'intersection (18 à 21) du convoyeur circulaire (7) ou du convoyeur supplémentaire (8, 108, 208) avec des convoyeurs longitudinaux (13, 16, 17) les marchandises (3, 4) se trouvant sur le convoyeur circulaire (7) et le convoyeur supplémentaire (8, 108, 208) ont priorité sur les marchandises (3, 4) sur les convoyeurs longitudinaux (13, 16, 17).

14. Procédé selon la revendication 13, **caractérisé en ce que** les marchandises (3, 4) au niveau des sections de source (9, 10) sont triées de façon à minimiser la fréquence de commutation d'un aiguillage (24, 25, 35, 36) se trouvant derrière les sections de source (9, 19) dans la direction de convoyage.
